# EUROPÄISCHE PATENTANMELDUNG

(11) **EP 2 535 637 A1**
(43) Veröffentlichungstag der Anmeldung: **19.12.2012**
(21) Anmeldenummer: 12466010.1
(22) Anmeldetag: 01.06.2012
(51) Int. Cl.: F21S 8/10, B60Q 1/26

(54) **Fahrzeugleuchte**

(30) Priorität: 15.06.2011 CZ 20110359
(71) Anmelder: Skoda Auto A.S., 293 60 Mladá Boleslav (CZ)
(72) Erfinder: Truhlar, Jan, 15483 (CZ)

(57) **Zusammenfassung**

Die Fahrzeugleuchte weist ein Kunststoffgehäuse (1) auf, das einen Abdeckteil (3), eine Stirnseite (4) und wenigstens einen Prismenteil (2) sowie wenigstens eine lichtemitierende Diode (5) umfasst, wobei die lichtemitierende Diode (5) dicht dem Ende (7) des Prismenteils (2) mit kleinerer Eintrittsfläche (10) anliegt und das zweite Ende (8) des Prismenteils (2) mit größerer Austrittsfläche (11) dicht dem durch die Stirnseite (4) gebildeten Gehäuseteil (1) anliegt.

## Beschreibung

### Technisches Gebiet

Die Erfindung betrifft eine Fahrzeugleuchte bestehend aus wenigstens einer lichtemitierenden derart orientierten Diode, dass die absolute Mehrheit ihres Lichtstromes in den Prismenteil des Leuchtengehäuses durch die Eintrittsfläche eintritt und durch die Stirnfläche der Glasabdeckung der Leuchte austritt. In einer vorteilhaften Ausführung betrifft es zum Beispiel die zusätzliche Bremsleuchte. Gleiches Prinzip kann auch für die Hauptbremsleuchte und mit weißen lichtemitierenden Dioden auch für Tageslicht eingesetzt werden.

### Bisheriger Stand der Technik

Die modernen Landfahrzeuge, insbesondere Kraftfahrzeuge, werden derzeit mit Leuchten mit lichtemitierenden Dioden ausgestattet. Das Licht aus diesen Dioden wird im relativ großen Raumwinkel ausgestrahlt - typisch in ganzen Halbraum (Lambertstrahler), während die gesetzlichen Vorgaben im Bereich der Kraftfahrzeugsignalleuchten ein zur optischen Achse konzentriertes Licht erfordern (typisch +-15° in vertikaler Richtung und +-45° in der horizontalen Richtung). Zur Konzentration des Diodenlichtes muss also ein geeignetes optisches System verwendet werden. Gewöhnliches System zur Lichtkonzentration für die zusätzliche Bremsleuchte stellt die Fresnel-Linse dar. Nachteilig ist, wie oben genannt, dass das Licht aus diesen Dioden im relativ großen Raumwinkel ausgestrahlt wird.

### Darstellung der Erfindung

Die Aufgabe wird durch die vorliegende Erfindung gelöst. Die neue Lösung betrifft eine Fahrzeugleuchte, die wenigstens eine lichtemitierende und derart orientierte Diode umfasst, dass die absolute Mehrheit ihres Lichtstroms in den Prismenteil des Leuchtengehäuses durch die Eintrittsfläche eintritt und durch die Stirnfläche der Glasabdeckung der Leuchte austritt. Die Lichteintrittsfläche des Prismas ist geringer als die Austrittsfläche. In einer vorteilhaften Ausführung betrifft die Erfindung eine zusätzliche Leuchte, zum Beispiel die Bremsleuchte.

Das Licht strömt durch das Material mit einem Brechungsindex n und dank des Phänomens der sogenannten Totalreflexion wird ein Teil des Lichtes von den Prismenflächen reflektiert und dieser tritt schließlich durch die Stirnseite des Leuchtengehäuses aus. Falls die Stirnfläche der Glasabdeckung mit der zur optischen Achse senkrechten Ebene den Winkel α einschließt, muss die Prismenachse um den Winkel β gegenüber der optischen Achse verschwenkt werden. Das Verhältnis der oben genannten Winkel richtet sich nach dem Snell-Gesetz und hängt vom Brechungsfaktor des Materials der Leuchte ab. Dank des sich ausweitenden Prismas wird der Lichtbündel nach einer mehrfachen Lichteflexion konvergiert und somit die Erfüllung der geforderten photometrischen Vorgaben für die Bremsleuchte in der Umgebung der optischen Achse gewährleistet.

Die Gesamtanzahl und Position der lichtemitierenden Dioden und auch der Prismen richtet sich nach den Anforderungen des Designs an die Form der Leuchte. Das Leuchtengehäuse kann durch Zwei-Komponenten-Einspritzverfahren hergestellt werden, damit die Entstehung von Einfallstellen und Deformationen vermieden wird. Der Gehäuseteil mit Prismen muss aus einem farblosen Material, die Glasabdeckung des Gehäuses kann aus einem rotfarbigen oder farblosen Material bestehen. Der Typ der lichtemitierenden Dioden - deren Leistung und Farbe - ergibt sich dann aus den photometrischen Anforderungen entsprechend der gesetzlichen Vorgabe.

### Übersicht der Figuren der Zeichnungen

Die Erfindung wird anhand schematischer Abbildungen näher erläutert, wobei die Fig. 1 die Fahrzeugleuchte im Schnitt, die Fig. 2 eine perspektivische Ansicht des Prismenteils des Leuchtengehäuses, die Fig. 3 den optischen Prinzip des Lichtdurchgangs durch das Prisma, die Fig. 4 den aus der lichtemitierenden Diode nach dem Stand der Technik austretenden breiten Lichtbündel, die Fig. 5 den aus der erfindungsgemäßen Leuchte austretenden konzentrierten Lichtbündel, die Fig. 6 und 7 die Beispiele weiterer möglicher Formen der Prismenteile und die Fig. 8 den Schnitt der Leuchte nach dem aktuellen Stand der Technik darstellt.

### Ausführungsbeispiele der Erfindung

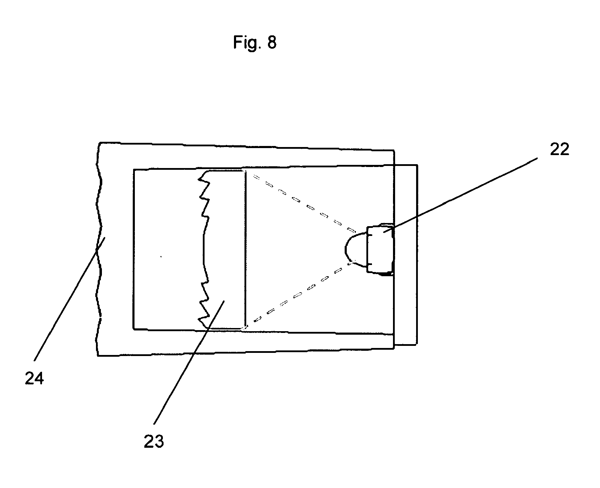

Der Schnitt eines typischen Systems der Diode und Fresnel-Linse nach dem Stand der Technik ist in Fig. 8 dargestellt. Die Diode 22 ist im Brennpunkt der Linse 23 angeordnet und so wird das Licht nach dem Durchgang durch die Linse in den Bereich um die optische Achse ausgerichtet. Der Nachteil eines derartigen Systems liegt darin, dass auf die Linsenfläche nur ein Teil des Lichtes der Diode 22 einfällt und das außerhalb der Fläche der Linse 23 einfallende Licht ungenutzt bleibt. Prinzipiell ist zu erkennen, dass je kürzer die Brennweite der Linse 23 und somit die Diode 22 näher zur Linse ist, desto größere Lichtmenge in die geforderte Richtung ausgerichtet werden kann. Durch das Verkürzen der Brennweite nimmt jedoch die Fresnel-Linse derartige Form an, die einerseits schwierig herstellbar ist und anderseits steigen wesentlich auch die Verluste durch die Reflexion an der Linsenoberfläche und das System verliert somit wieder an Wirksamkeit. Um die geforderte Lichtstreuung zu erreichen, muss die Fresnel-Linse oft mit weiterer Glasabdeckung 24 mit einer Streuoptik ergänzt werden, was die Verluste durch die Reflexion an der Oberfläche der Glasabdeckung 24 und somit auch die Herstellungskosten des ganzen Systems weiter erhöht.

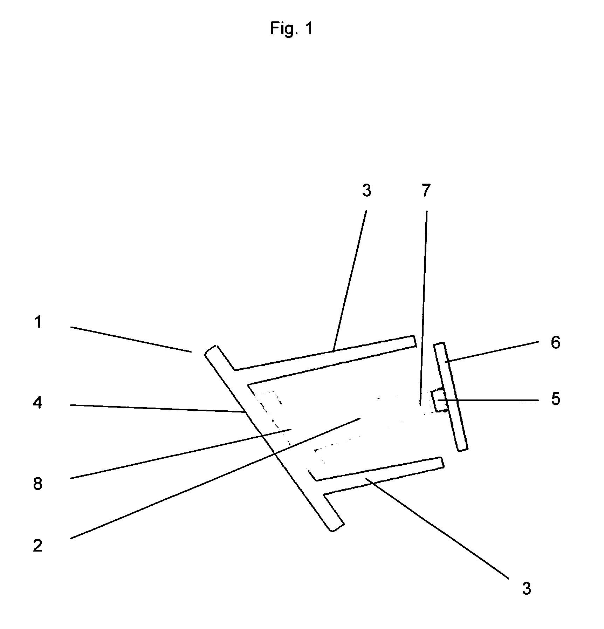

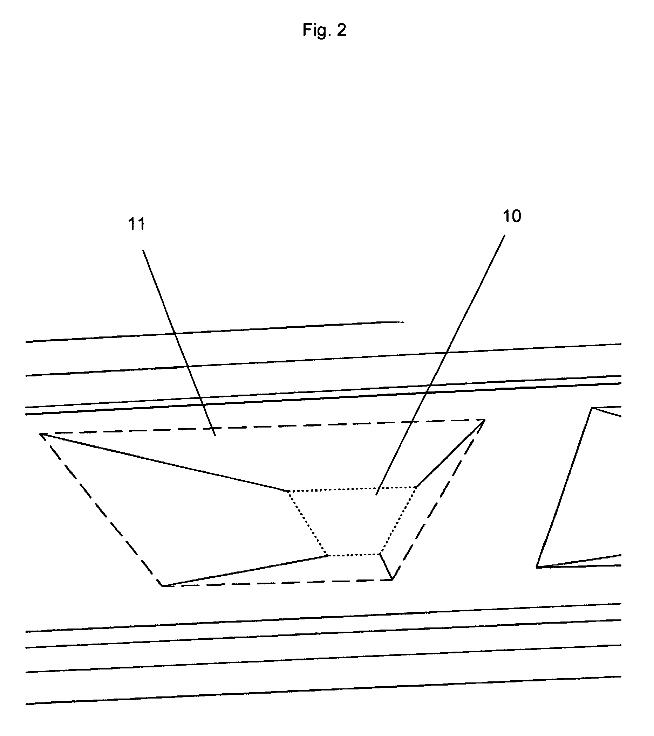

Die erfindungsgemäße technische Lösung ist in Fig. 1, in der die Fahrzeugleuchte im Schnitt dargestellt ist, sowie in Fig. 2 angedeutet, wo die perspektivische Ansicht des Prismenteils 2 des Leuchtengehäuses 1 abgebildet ist.

Die Fahrzeugleuchte besteht aus einem Kunststoffgehäuse 1, das einen Abdeckteil 3, eine Stirnseite 4 und wenigstens einen Prismenteil 2 umfasst. Die Fahrzeugleuchte umfasst ferner wenigstens eine lichtemitierende Diode 5, welche an der Leiterplatte 6 angeordnet ist. Die lichtemitierende Diode 5 liegt dicht dem einen Ende 7 des Prismenteils 2 mit kleinerer Eintrittsfläche an 10 und das zweite Ende 8 des Prismenteils 2 mit größerer Austrittsfläche 11 liegt dicht dem durch die Stirnseite 4 gebildeten Gehäuseteil 1 an.

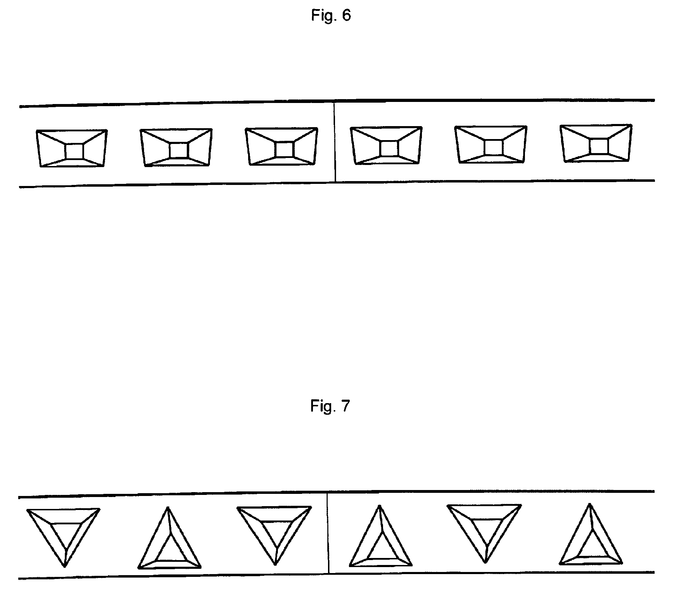

Der Prismenteil 2 kann einen Dreieck- oder Viereckquerschnitt aufweisen, wie in den Fig. 6 und 7 dargestellt ist. Die Anzahl der Formen kann relativ breit sein und deshalb muss für die Funktionstüchtigkeit des Systems sichergestellt werden, dass die Austrittsfläche 11 des Prismenteils 2 größer als die Eintrittsfläche 10 ist. Derjenige Teil des optischen Systems, der die Konzentration des Lichtbündels besorgt, hat deshalb in Abhängigkeit vom gewählten Querschnitt die Form eines sich ausweitenden Prismas oder Kegels.

Der vorliegenden Erfindung nach tritt die absolute Mehrheit des Lichtstroms von der Diode 5 in den Prismenteil 2 des Leuchtengehäuses 1 mit kleiner Eintrittsfläche 10 ein und aus der äußeren Austrittsfläche 11 bzw. der Stirnseite 4 des Leuchtengehäuses 1 aus.

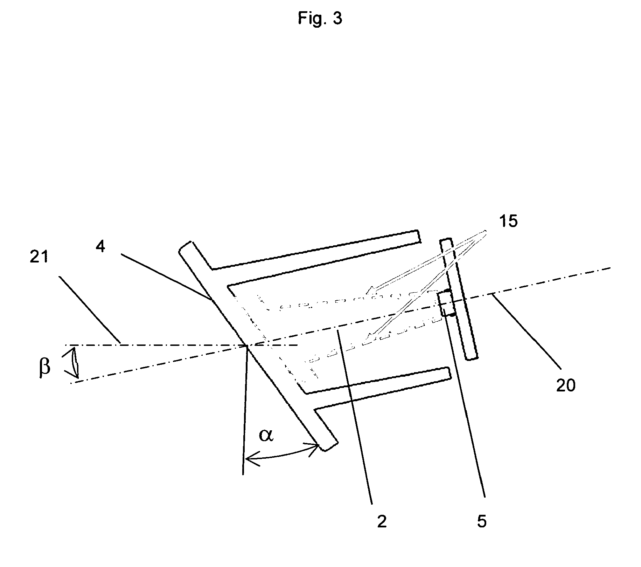

Dieses optische Prinzip des Lichtdurchgangs durch das Prisma ist der Fig. 3 zu entnehmen.

Das Licht strömt durch das Material mit einem Brechungsindex n und dank des Phänomens der sogenannten Totalreflexion wird ein Teil des Lichtes von den Prismenflächen 15 reflektiert und dieser tritt schließlich durch die Stirnseite 4 des Leuchtengehäuses 1 aus. Falls die Stirnfläche 4 mit der zur optischen Achse 21 senkrechten Ebene den Winkel α einschließt, ist die Achse 20 des Prismenteils 2 um den Winkel β gegenüber der optischen Achse 21 verschwenkt, wobei sich der Verhältnis beider Winkel nach dem Snell-Gesetz richtet und vom Brechungsfaktor des Materials der Leuchte abhängig ist.

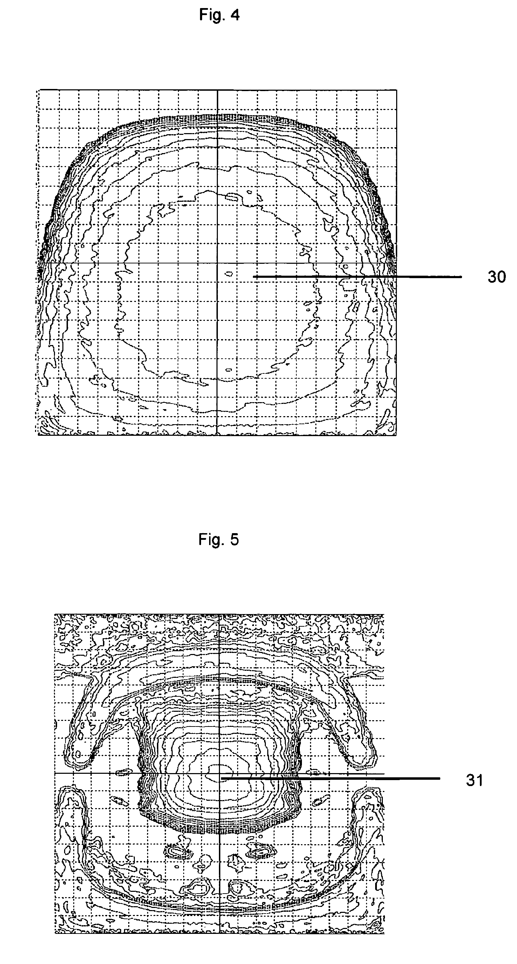

Dank der sich ausweitenden Form des Prismenteils 2 wird der Lichtbündel nach einer mehrfachen Lichteflexion an den Wänden des Prismenteils 2 konvergiert und das Licht somit in die Umgebung der optischen Achse 20 konzentriert, wie vergleichend aus Fig. 5 und 6 ersichtlich ist. Dieser Effekt kann vorteilhaft gerade bei der Realisierung von Signalleuchten für Fahrzeuge genutzt werden.

In der Fig. 5 und 6 kann der Einfluss des optischen Systems auf den Lichtaustritt verglichen werden. Fig. 5 stellt den aus der lichtemitierenden Diode 5 austretenden breiten Lichtbündel 20 und Fig. 6 den nach vorliegender Erfindung aus der Leuchte mit beschriebenem optischen System austretenden konzentrierten Lichtbündel 31 dar. Der Grad der Minderung der Lichtbündeldivergenz durch das optische System kann grob anhand des Verhältnisses der Austrittsfläche 11 und der Eintrittsfläche 10 des Prismas 2 geschätzt werden.

Die Gesamtanzahl und Position der lichtemitierenden Dioden 5 sowie der Prismen 2 richtet sich nach den Anforderungen des Designs an die Form der Leuchte. Das Leuchtengehäuse 1 wird durch Zwei-Komponenten-Einspritzverfahren hergestellt, damit die Entstehung von Einfallstellen und Deformationen vermieden wird. Der Prismenteil 2 besteht aus einem farblosen Material und der Abdeckteil 3 und die Stirnseite 4 aus einem rotfarbigen oder farblosen Material. Der Typ der lichtemitierenden Dioden, deren Leistung und Farbe, ergibt sich dann aus den photometrischen Anforderungen entsprechend der gesetzlichen Vorgabe.

## Patentansprüche

1. Die Fahrzeugleuchte **dadurch gekennzeichnet, dass** sie ein Kunststoffgehäuse (1) aufweist, das einen Abdeckteil (3), eine Stirnseite (4) und wenigstens einen Prismenteil (2) sowie wenigstens eine lichtemitierende Diode (5) umfasst, wobei die lichtemitierende Diode (5) dicht dem Ende (7) des Prismenteils (2) mit kleinerer Eintrittsfläche (10) anliegt und das zweite Ende (8) des Prismenteils (2) mit größerer Austrittsfläche (11) dem durch die Stirnseite (4) gebildeten Gehäuseteil (1) anliegt.

2. Die Fahrzeugleuchte nach Anspruch 1 **dadurch gekennzeichnet, dass** die lichtemitierende Diode (5) an der Leiterplatte (6) angeordnet ist.

3. Die Fahrzeugleuchte nach vorgenannten Ansprüchen **dadurch gekennzeichnet, dass** der Prismenteil (2) einen kreisförmigen oder dreieckigen oder viereckigen oder sechseckigen oder mehreckigen Querschnitt aufweist.

4. Die Fahrzeugleuchte nach vorgenannten Ansprüchen **dadurch gekennzeichnet, dass** falls die Stirnfläche (4) mit der zur optischen Achse (21) senkrechten Ebene den Winkel α einschließt, ist die Achse (20) des Prismenteils (2) um den Winkel β gegenüber der optischen Achse (21) verschwenkt, wobei sich das Verhältnis beider Winkel nach dem Snell-Gesetz richtet und vom Brechungsfaktor des Materials der Leuchte abhängig ist.

5. Die Fahrzeugleuchte nach Anspruch 1 **dadurch gekennzeichnet, dass** das Leuchtengehäuse (1) durch Zwei-Komponenten-Einspritzverfahren hergestellt ist, wobei der Prismenteil (2) aus einem farblosen Material und der Abdeckteil (3) und die Stirnseite (4) aus rotfarbigem oder farblosem Material bestehen.
